(19) Europäisches Patentamt
European Patent Office
Office européen des brevets

(11) **EP 1 489 795 B1**

(12) **EUROPEAN PATENT SPECIFICATION**

(45) Date of publication and mention
of the grant of the patent:
**15.12.2010 Bulletin 2010/50**

(51) Int Cl.:
***H04L 12/56*** *(2006.01)*

(21) Application number: **04300227.8**

(22) Date of filing: **26.04.2004**

(54) **Network swtich configured to weight traffic**

Netzwerkvermittlung mit einer Konfiguration zum Datenverkehrsgewicht

Comutateur de réseau configuré pour pondération de trafic

(84) Designated Contracting States:
**DE ES FR GB IT**

(30) Priority: **25.04.2003 US 465652 P**
**23.04.2004 US 831720**

(43) Date of publication of application:
**22.12.2004 Bulletin 2004/52**

(73) Proprietor: **Alcatel IP Networks, Inc.**
**Plano, TX 75075 (US)**

(72) Inventors:
• **Willhite, Nelson**
**Sunnyvale, CA 94085 (US)**
• **Noll, Mike**
**San Jose, CA 95139 (US)**
• **Martin, Robert Steven**
**Los Gatos, CA 95030 (US)**
• **Duggal, Akhil**
**Los Altos, AK 94022 (US)**
• **Lindberg, Craig**
**Nevada City, CA 95959 (US)**
• **Jones, Thomas Carleton**
**San Jose, CA 95121 (US)**
• **Komidi, Srinivas**
**Cupertino, CA 95014 (US)**

(74) Representative: **Nicolle, Olivier et al**
**Alcatel Lucent**
**32 avenue Kléber**
**92700 Colombes (FR)**

(56) References cited:
EP-A- 1 026 856          WO-A-99/03237
US-A1- 2001 006 522     US-A1- 2002 075 875

**Description**

This application claims priority to U.S. Provisional Patent Application No. 60/465,652 entitled NETWORK SWITCH AND FABRIC ACCESS ARCHITECTURE filed April 25, 2004.

## FIELD OF THE INVENTION

The present invention relates generally to networking systems. More specifically, a technique for providing multiple levels of service is disclosed.

## BACKGROUND OF THE INVENTION

In data communication networks, devices such as routers and switches are often used to transfer data from a source to a destination. Existing switching systems typically employ a switch fabric that switches data from source ports (also referred to as input ports) to destination ports (also referred to as output ports). The source ports are typically given equal access to each destination port. For example, in a switch fabric where each destination port is configured to receive data from three source ports, each of the three source ports typically has equal access to the destination port. Such equal access may result from the fact that frames from all sources to a particular destination are placed in a single queue or buffer, such as a FIFO, and serviced in the order received.

WO9903237 provides an illustration of such a typical switch. WO9903237 discloses an Asynchronous Transfer Mode (ATM) switch that comprises a controlled which augments an ATM cell with buffering data. During cell ingress into the switch, a buffer circuit connected to the controller receives an augmented ATM cell and stores the augmented ATM cell in a buffer cell memory in accordance with the buffering data. Upon extraction from the buffer cell memory, the ATM cell is routed through a switch core. During cell egress from the switch the cell leaves the switch core travels through a switch port and is received at a second buffer circuit. The second buffer circuit stores the augmented ATM cell in a cell buffer memory in accordance with the buffering data.

While the typical switch design is useful for systems that offer equal access to all source ports, sometimes it may be desirable to allow some of the source ports to have more bandwidth access than others. For example, a system operator may wish to offer different levels of services where certain customers receive a greater amount of bandwidth than others. In some cases, it may be desirable to provide different guarantees for different classes of service (e.g., different priority levels), and/or by source-destination pair (e.g., by IP flow). It would be desirable if a switch fabric can be configured to support such service level agreements. It would also be useful if the configuration is flexible so that the service levels can be reconfigured easily.

## BRIEF DESCRIPTION OF THE DRAWINGS

Various embodiments of the invention are disclosed in the following detailed description and the accompanying drawings.

Figure 1 is a block diagram illustrating an embodiment of a switching system.

Figure 2A is an architectural diagram illustrating a switch fabric embodiment.

Figure 2B is a diagram illustrating a junction and its associated queue set, according to some embodiments.

Figure 3 is a flowchart illustrating the processing of data according to certain embodiments.

Figure 4 is a diagram illustrating the design of a switch circuit embodiment.

## DETAILED DESCRIPTION

The invention can be implemented in numerous ways, including as a process, an apparatus, a system, a composition of matter, a computer readable medium such as a computer readable storage medium or a computer network wherein program instructions are sent over optical or electronic communication links. In this specification, these implementations, or any other form that the invention may take, may be referred to as techniques. In general, the order of the steps of disclosed processes may be altered within the scope of the invention.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

Dual level scheduling of network switch fabric destination ports to fulfill service level guarantees is disclosed. In some embodiments, data is classified into a plurality of classes, and a next queue to be serviced within each class is specified. A next class to be serviced is selected, and data from the next queue of the next class to be serviced is sent via an egress link. The selection of the queue and class may be performed according to certain schedules. The schedulers may be configured to fulfill certain service level agreements. In some embodiments, the schedulers are dynamically configured based on observation of the incoming traffic.

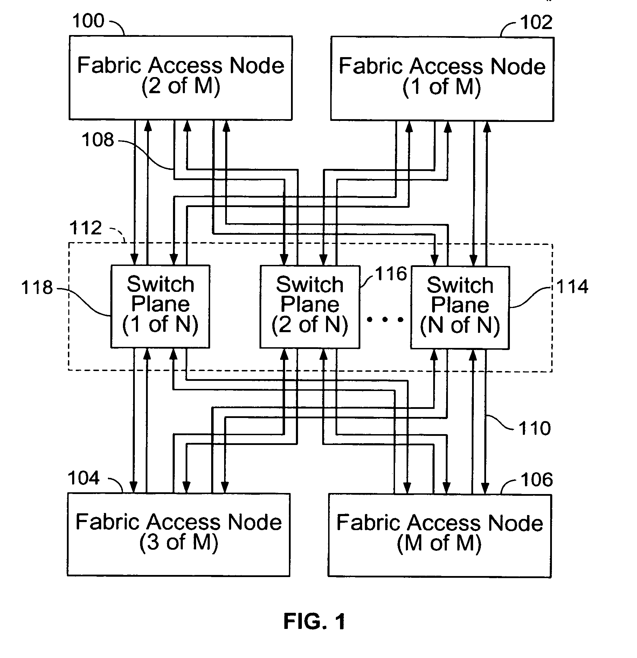

Figure 1 is a block diagram illustrating an embodiment of a switching system. In this example, a number "M" of fabric access nodes, represented in Figure 1 by fabric access nodes 100 - 106, are coupled to a switch fabric 112. Switch fabric 112 includes a plurality of "N" switch planes, represented in Figure 1 by switch planes 114 - 118. For the purposes of example, in the following discussion, data packets are divided into cells and switched. Other units of measurements for data being transferred, such as packets, frames, cell segments, etc. may also be used The lengths of the units may be fixed or variable.

Each of the switch planes can switch cells independently, without requiring synchronization with other switch planes. Each switch plane may be a separate physical device, although in some embodiments one physical device, e.g., one integrated circuit, may support multiple switch planes. Each fabric access node is associated with one or more ports that are connected to the switch plane via bi-directional connections such as 108 and 110. As used herein, a port refers to a logical source or destination that can be addressed for the purposes of transferring data. Data is transferred from a source port to a destination port via the bidirectional connections. A link used to transfer data from an input (source) port to the switch fabric is referred to as an ingress link, and a link used to transfer data from the switch fabric to an output (destination) port is referred to as an egress link. In the example shown, a port is serviced by an ingress-egress link pair. A port may also be serviced by several link pairs that are bundled. The actual number of access nodes, switch planes, ports, as well as the number of links used to serve the ports depend on implementation and may vary for different embodiments.

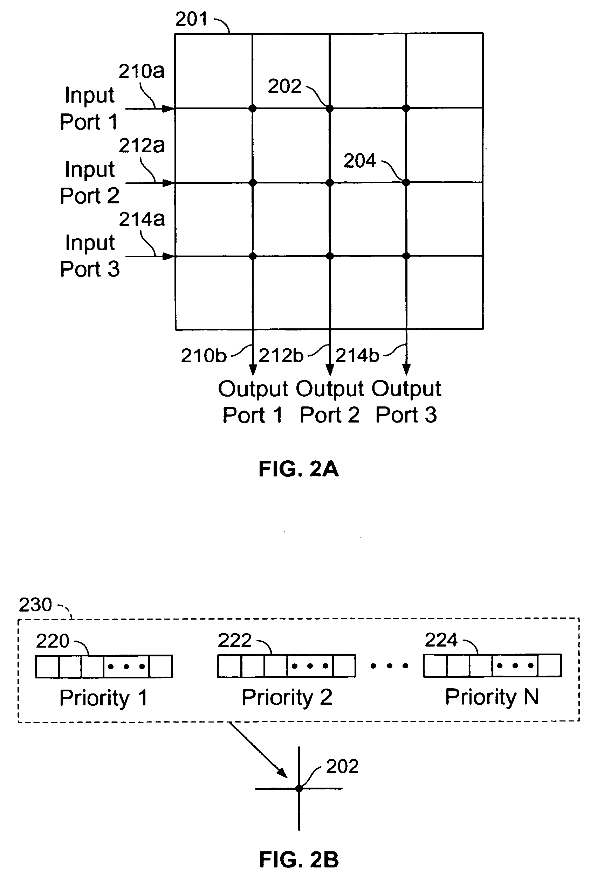

Figure 2A is an architectural diagram illustrating a switch fabric embodiment. In this example, switch device 212 allows data to be switched between a plurality of ports. Three ports numbered 1-3 are shown, although the number of ports may vary for other embodiments. The ports can both send and receive data. In other words, each port functions both as an input port (also referred to as a source port) from which data originates and as an output port (also referred to as a destination port) to which data is sent. Thus, the input ports and the output ports are shown separately and the association between an input port and an output port is indicated by the shared numerical portion of their labels (e.g. input port 1 associated with ingress link 210a and output port 1 associated with egress link 210b are the input-output port pair of the same logical port 1). Data originating from input ports 1, 2 and 3 are sent to the switch device via ingress links 210a, 212a and 214a, respectively.

The switch device 201 is represented as a cross-bar structure through which data received on an ingress link may be sent to an appropriate egress link by being switched to the egress link at one of the junctions indicated by the large black dots marking the intersection points of the cross-bar, such as junctions 202 (providing a path from ingress link 210a to egress link 212b) and 204 (providing an input path from ingress link 212a to egress link 214b). Although each ingress link is connected to every other egress link in the embodiment shown, in some embodiments (such as embodiments with bundled links), an ingress link may be connected to fewer than all the available egress links.

In some embodiments, a service level agreement is established to guarantee a predetermined amount of bandwidth for certain types of traffic. The service level agreements may be implemented using priority levels. In some embodiments, a higher priority level is given to customers who subscribe to the premium service. In some embodiments, for the same customer, a higher priority level is given to traffic that is deemed more important (for example, a bank may assign a higher priority level to wire transfer traffic than email traffic). Service level guarantees may also be given based on destination or source-destination pairs (e.g., by IP flow). For example, a customer may be willing to pay more for a guarantee level of bandwidth between two systems that exchange a high volume of critical data over the network served by the switch.

In some embodiments, at each junction of the cross bar structure shown in Figure 2A, input data is classified and buffered in a queue set associated with the junction and class. Each junction may have one or more queues, depending on how many classes of traffic are defined or supported. Each junction is associated with the logical source port associated with the corresponding ingress link and the logical destination port associated with the corresponding egress link. Therefore, each junction includes one or more queues, each associated with the source-destination pair with which the junction is associated, and each associated with its respective class of traffic. For the purpose of example, embodiments in which data is classified according to service priority levels are discussed throughout the specification, although other classification criteria may be applicable as well. Figure 2B is a diagram illustrating a junction and its associated queue set, according to some embodiments. In this example, the system maintains N different priority levels. Each cell being transferred is classified according to its priority level, which corresponds to a value between 1 to N. Junction 202 of the switch device is associated with a queue set 230 that includes N queues corresponding to the N priority levels. Similarly, other junctions of the switch device are each associated with a like queue set. Referring to Figure 2A, one can see that the queue set 230 of Figure 2B, which is associated with junction 202, is associated with input (source) port 1 and output (destination) port 2. The incoming data cells are buffered in a queue with matching priority level, and then serviced according to a prescribed scheduling process. Details of how the queues are serviced are discussed below.

Several different methods may be employed to classify the cell. In some embodiments, each cell includes an identifier that can be used to determine the cell's classification. For example, a flag or other value in the header may be used to indicate the priority level of the data unit. In some embodiments, the cell's content is examined to determine its classification. For example, some systems allow different service levels to be set for various source/destination address combinations. Such systems may classify cells according to their source addresses and/or destination addresses (e.g., by IP flow).

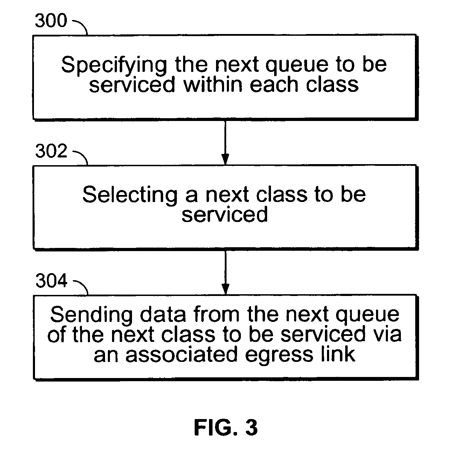

Figure 3 is a flowchart illustrating the processing of data according to certain embodiments. In this example, input data is classified into several classes based on the priority level of the data. Data from a source port may be classified into several classes (based on, for example, the address associated with the data) and buffered in appropriate queues. As a result, each class includes data queues that are associated with different source ports and have the same priority level. During the operation, the next queue to be serviced within each class is specified (300). Referring to Figure 2A, an instance of the process shown in Figure 3 may be implemented for each egress link 210b, 212b, and 214b. For each egress link, each of the junctions associated with the egress link may have associated with it a plurality of queues of different priorities for the source associated with the junction. In some embodiments, step 300 comprises specifying as between the queues of the same priority from the junctions associated with the egress link (e.g., between the priority 1 queue associated with source port 1 for egress link 210a, the priority 1 queue associated with source port 2 for egress link 210a, and the priority 1 queue associated with source port 3 for egress link 210a) the next queue from that class to be serviced (i.e., which source port's priority 1 queue will be serviced the next time a priority 1 queue is serviced for that egress link). The next class to be serviced is selected (302). Data is then sent from the next queue of the next class to be serviced via the associated egress link to the associated destination port (304). The processing logic may be implemented in several different ways, including software or firmware code executed by a processor, application specific integrated circuit, logic circuitry that is a discrete component or a part of the switch circuit, or any other appropriate processing component.

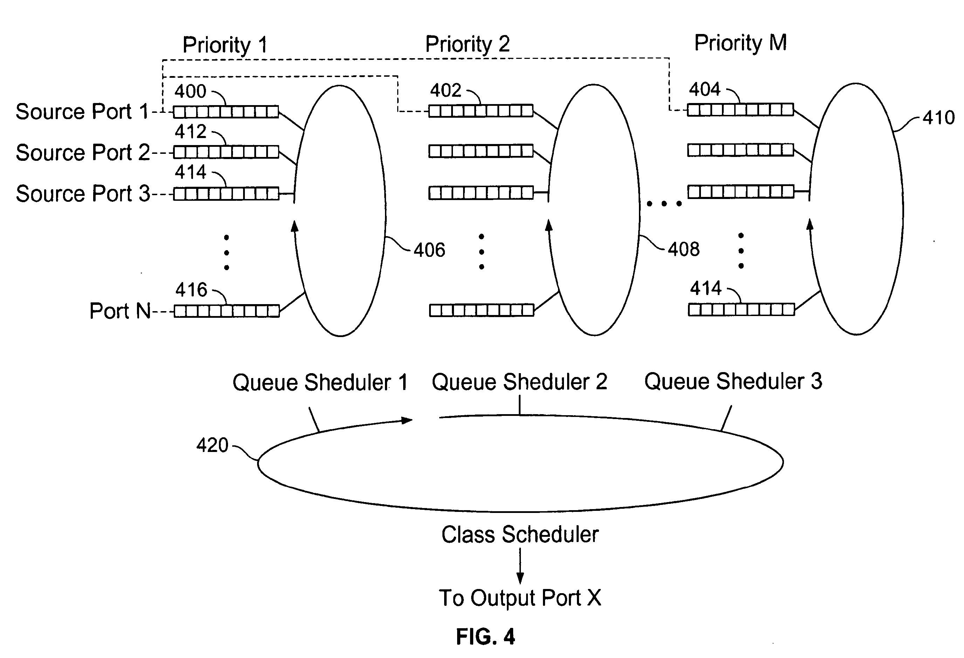

Figure 4 is a diagram illustrating the design of a switch circuit embodiment. In this example, data designated for an output port X is classified based on the source port from which the data originated. Such classification allows different levels of services to be provided to different service subscribers, as well as to provide different services levels for different destinations. For example, a subscriber may set all of the traffic originating from the subscriber site to be of the highest priority and obtain the best guaranteed service; alternatively, the subscriber may grant higher priority to certain important addresses or domains, and set lower priority for the rest, thus achieving cost savings.

Data from a source port (such as input port 1) is stored in M priority queues (such as 400 - 404) that correspond to priority levels 1 - M. Queues associated with different ports and of the same priority level form a class. For example, queues 400, 412, 414 and 416, associated with source ports 1, 2, 3 and 4 respectively and all of priority level 1, collectively form a class. Each class has a corresponding scheduler configured to determine which one of the queues within the class is to be served next. In the example shown, classes of priority 1, 2 and M correspond to schedulers 406, 408 and 410, respectively. The schedulers operate independent of each other. In some embodiments, the queue schedulers employ a weighted round robin scheduling algorithm, where the frequency with which a queue associated with a particular source port is serviced relative to other queues in the same class depends on the weight assigned to the source port. Various scheduling algorithms may he used by the schedulers.

A class scheduler 420 determines and selects the next class to be serviced. Once a class is selected, data from the next queue of the selected class is sent to output port X via the egress link associated with the scheduling process shown in Figure 4. Scheduler 420 may employ various scheduling algorithms such as round robin, weighted round robin, or any other appropriate algorithm.

For example, at a certain point in time, the queue schedulers determine that the next queues to be serviced within priority classes 1, 2 and M correspond to queues 412, 402 and 414, respectively. Once class scheduler 420 determines that priority class 1 is to be serviced next, data from queue 412 is sent via the egress link to output port X. Similarly, when priority class 2 or priority class M is selected by scheduler 420, queue 402 or 414 is serviced. Class scheduler 420 may weight its selection based on the priority of the class. For example, it may be configured according to a weighted round robin algorithm to spend thirty percent of the time servicing priority class 1, twenty percent servicing priority class 1, five percent servicing priority class M, etc.

By adjusting the weights of the queue and class schedulers, certain types of data (such as data from a particular source port to a particular destination port at a certain priority) can be configured to be guaranteed to have a prescribed amount of bandwidth. The adjustment is illustrated by the following example in which a switch fabric includes N input ports and an output port with a bandwidth of K. For the sake of simplicity, assume that there are two priority levels and the class scheduler implements a weighted round robin algorithm with a weight of W for priority level 1 and a weight of 1 for priority level 2 (i.e. the scheduler spends $W/(W+1)$ of the time servicing priority level 1 and $1/(W+1)$ of the time servicing priority level 2). Also assume that the queue scheduler fur priority level 1 implements a weighted round robin algorithm, with a weight of S for source port 1 and a weight of 1 for the rest of the source ports. The relationship between the variables may be expressed as the following:

$$\frac{S}{S+(N-1)} \cong \frac{G}{K \bullet \dfrac{W}{W+1}}$$

where G is the bandwidth desired to be guaranteed for the source port associated with the weight S, i.e., source port 1 in the example described above.

The value of a weight may be chosen by setting the other variables and solving the equation. The equation may be applied to, for example, a system with 32 input ports (N=32) and an output bandwidth of 10 Gigabits (K=10). Assume the objective is to guarantee 1 Gigabits of bandwidth for servicing priority level 1 data from input port 1. Further assume the weight assigned to priority 1 traffic, W, is equal to 4. Solving the above equation yields a source port weight S equal to approximately 4.429. Other W values may also be used to obtain different S. Similar relationships may be derived for systems with different variables.

For example, for any given source port and priority, a source weight S, and a class weight $W_j$ may be assigned, with the relationship between the respective weights for any particular source-class pair, assuming 1 to N source ports and 1 to M classes (priorities) as in the example shown in Figure 4, being given by the equation:

$$\frac{S_i}{\sum\limits_{i=1}^{N} S_i} = \frac{G}{K \bullet \dfrac{W_j}{\sum\limits_{j=1}^{M} W_j}}$$

In some embodiments, the above equation would be used to ensure that the source weights $S_i$ of the respective source ports and the class priorities $W_j$ are such that the service guarantee G is fulfilled with respect to each applicable destination.

In some embodiments, the service level agreements, the weights of the schedulers, as well as the priority levels can be adjusted dynamically. Since the bandwidth of the system is not utilized in full at all times, dynamic adjustments allow the system to assign bandwidth to various subscribers in a flexible manner and take advantage of the statistical nature of traffic data to more efficiently utilize the bandwidth. Over subscription can be more effectively handled. In some embodiments, the input traffic is observed (by, for example, a control processor or circuit) and the adjustments to the parameters of the queue scheduler and/or class scheduler are made in response to the observation. For example, a switch fabric with an output port that supports a maximum of 3 Gigabits of bandwidth may be configured to offer 1 Gigabits of the bandwidth to priority level 1 data originating from input port 1, and 500 Megabits of the bandwidth to priority level 1 data originating from input ports 2, 3, 4 and 5. If it is observed that there is only 100 Megabits of level 1 traffic originating from input port 1, however, there is 600 Megabits of lcvel 1 traffic originating from each of the other input ports, the weights of the queue scheduler for level 1 traffic and/or the weights ofthe class scheduler may be adjusted so that the queue for input port 1 is serviced just often enough to guarantee 100 Megabits of traffic, and the other input ports are serviced more frequently to increase their bandwidth guarantee.

While the dual level scheduling described in the examples discussed in detail above involve scheduling by destination based on source and class, the approach described herein may be used to schedule a switch fabric destination port on a basis other than the source or class of the respective cells. More than two levels of scheduling may also be used.

Although the foregoing embodiments have been described in some detail for purposes of clarity of understanding, the invention is not limited to the details provided. There are many alternative ways of implementing the invention. The disclosed embodiments are illustrative and not restrictive.

## Claims

1. A method of switching network traffic at a switching system for providing multiple levels of service with services guarantees, **characterized in that** it comprises:

   i) specifying a plurality of classes of traffic to be distinctly serviced at said switching system;
   ii) at an output port (210b, 212b, 214b) of said switching system, placing data units arriving from N source ports (210a, 212a, 214a) into M classes of queues each class having priority 1,..., priority M, each class including N queues (400, 412, 414, 416);
   iii) selecting (300) a priority queue (400, 402, 404) to be serviced from each said M classes (400, 412,414,416);
   iv) selecting (302) a next queue (400) to be serviced first from said priority queues (400, 402, 404) selected in step iii); and
   v) transmitting (304) data units from said next queue (400) selected at step iii) via an associated egress link at said output port (210b, 212b, 214b).

2. A method of switching network traffic as recited in Claim 1, wherein said class is determined by the source (210a, 212a, 214a) and destination (210b, 212b, 214b) port of data units.

3. A method of switching network traffic as recited in Claim 1, wherein said class is established based on a traffic parameter of said data units.

4. A method of switching network traffic as recited in Claim 3, wherein said traffic parameter is bandwidth.

5. A method of switching network traffic as recited in Claim 1, wherein said classis identified by a flag provided in the header of said data units.

6. A method of switching network traffic as recited in Claim 1, wherein said class is identified by a source address, a destination address, or both source and destination addresses of data units.

7. A method of switching network traffic as recited in Claim 1, wherein step iii) comprises providing M queue schedulers (406, 408, 410), each queue scheduler for each class for selecting a respective priority queue of said queues within a class.

8. A method of switching network traffic as recited in Claim 7, wherein said queue schedulers (406, 408, 410) use a weighted round robin scheduling process.

9. A method of switching network traffic as recited in Claim 7, wherein said queue schedulers (406, 408, 410) use weights Si associated with data units received from said input ports (210a, 212a, 214a).

10. A method of switching network traffic as recited in Claim 7, wherein step iv) comprises providing a class scheduler (420), for selecting said next priority queue from said priority queues selected by said M queues schedulers (406, 408, 410).

11. A method of switching network traffic as recited in Claim 10, wherein said class scheduler (420) uses a weighted round robin scheduling process.

12. A method of switching network traffic as recited in Claim 10, wherein said class scheduler (420) uses weights Wj assigned to said classes.

13. A method of switching network traffic as recited in Claim 12, wherein said weights Si and Wi are configurable.

14. A method of switching network traffic as recited in Claim 1, wherein each said input port (210a, 212a, 214a) is associated with a logical source of said data units and said output port (210b, 212b, 214b) is associated with a logical destination of said data units.

15. A method of switching network traffic as recited in Claim 1, wherein classes are determined by a priority level.

16. A multi-level scheduling system for a switch fabric were data units are scheduled for transmission based on service level agreements specifying M classes of traffic that are to be distinctly serviced at said switching system, **characterized in that** it comprises, at each output port (210b, 212b, 214b) of said fabric:

NxM queues, where N is the number of input ports (210a, 212a, 214a) that are adapted to transmit data units to said output port (210b, 212b, 214b);
a first level of scheduling, comprising M queue schedulers (406, 408, 410), each queue scheduler being associated with a class (priority 1) for selecting a priority queue from said N queues (400, 412, 414, 416) within said class;
a second level of scheduling, comprising a class scheduler (420) for selecting a next priority queue to be serviced from said priority queues and scheduling for transmission data units from said next queue over an associated egress link at said output port (210b, 212b, 214b).

**Patentansprüche**

1. Ein Verfahren zum Vermitteln von Netzwerkverkehr an einem Vermittlungssystem zum Bereitstellen von mehrfachen Dienststufen mit Dienstegarantien, **dadurch gekennzeichnet, dass** es umfasst:

i) Spezifieren einer Mehrzahl von Verkehrsklassen, welche an dem besagten Vermittlungssystem individuell zu bedienen sind;
ii) an einem Ausgangsport (210b, 212b, 214b) des besagten Vermittlungssystems, Einordnen der von N Quellports (210a, 212a, 214a) eingehenden Dateneinheiten in M Warteschlangenklassen, wobei jede Klasse eine Priorität 1, ..., Priorität M hat, wobei jede Klasse N Warteschlangen (400, 412, 414, 416) umfasst;
iii) Auswählen (300) einer zu bedienenden Prioritätswarteschlange (400, 402, 404) aus einer jeden der besagten M Klassen (400, 412, 414, 416);
iv) Auswählen (302) einer nächsten zu bedienenden Warteschlange (400) aus den besagten in Schritt iii) ausgewählten Prioritätswarteschlangen (400, 402, 404); und
v) Übertragen (304) der Dateneinheiten von der besagten in Schritt iii) ausgewählten nächsten Warteschlange (400) über einen zugeordneten Ausgangs-Link an dem besagten Ausgangsport (210b, 212b, 214b).

2. Ein Verfahren zum Vermitteln von Netzwerkverkehr nach Anspruch 1, wobei die besagte Klasse von dem Quellport (210a, 212a, 214a) und dem Zielport (210b, 212b, 214b) der Dateneinheiten bestimmt wird.

3. Ein Verfahren zum Vermitteln von Netzwerkverkehr nach Anspruch 1, wobei die besagte Klasse auf der Basis eines Verkehrsparameters der besagten Dateneinheiten ermittelt wird.

4. Ein Verfahren zum Vermitteln von Netzwerkverkehr nach Anspruch 3, wobei der besagte Verkehrsparameter die Bandbreite ist.

5. Ein Verfahren zum Vermitteln von Netzwerkverkehr nach Anspruch 1, wobei die besagte Klasse anhand eines im Kopfteil der besagten Dateneinheiten enthaltenen Flags identifiziert wird.

6. Ein Verfahren zum Vermitteln von Netzwerkverkehr nach Anspruch 1, wobei die besagte Klasse anhand einer Quelladresse, einer Zieladresse oder anhand sowohl der Quell- als auch der Zieladresse der Dateneinheiten identifiziert wird.

7. Ein Verfahren zum Vermitteln von Netzwerkverkehr nach Anspruch 1, wobei Schritt iii) das Bereitstellen von M Warteschlangenplanern (406, 408, 410) umfasst, wobei jeder Warteschlangenplaner für jede Klasse für das Auswählen einer jeweiligen Prioritätswarteschlange der besagten Warteschlangen innerhalb einer Klasse bestimmt ist.

8. Ein Verfahren zum Vermitteln von Netzwerkverkehr nach Anspruch 7, wobei die besagten Warteschlangenplaner (406, 408, 410) einen gewichteten Round-Robin-Planungsprozess verwenden.

9. Ein Verfahren zum Vermitteln von Netzwerkverkehr nach Anspruch 7, wobei die besagten Warteschlangenplaner (406, 408, 410) Wichtungen Si, welche mit den von den besagten Eingangsports (210a, 212a, 214a) empfangenen Dateneinheiten assoziiert sind, verwenden.

10. Ein Verfahren zum Vermitteln von Netzwerkverkehr nach Anspruch 7, wobei Schritt iv) das Bereitstellen eines Klassenplaners (420) zum Auswählen der besagten nächsten Prioritätswarteschlange aus den besagten von den besagten M Warteschlangenplanern (406, 408, 410) ausgewählten Prioritätswarteschlangen umfasst.

11. Ein Verfahren zum Vermitteln von Netzwerkverkehr nach Anspruch 10, wobei der besagten Klassenplaner (420) einen gewichteten Round-Robin-Planungsprozess verwendet.

12. Ein Verfahren zum Vermitteln von Netzwerkverkehr nach Anspruch 10, wobei der besagte Klassenplaner (420) den besagten Klassen zugewiesene Wichtungen Wj verwendet.

13. Ein Verfahren zum Vermitteln von Netzwerkverkehr nach Anspruch 12, wobei die besagten Wichtungen Si und Wj konfigurierbar sind.

14. Ein Verfahren zum Vermitteln von Netzwerkverkehr nach Anspruch 1, wobei ein jeder der besagten Eingangsports (210a, 212a, 214a) mit einer logischen Quelle der besagten Dateneinheiten assoziiert ist, und der besagte Ausgangsport (210b, 212b, 214b) mit einem logischen Ziel der besagten Dateneinheiten assoziiert ist.

15. Ein Verfahren zum Vermitteln von Netzwerkverkehr nach Anspruch 1, wobei die Klassen anhand einer Prioritätsstufe bestimmt werden.

16. Ein mehrstufiges Planungssystem für eine Switch-Fabric, wobei Dateneinheiten auf der Basis von Dienstgütevereinbarungen, welche M Verkehrsklassen, die an dem besagten Vermittlungssystem individuell zu bedienen sind, spezifizieren, für die Übertragung geplant werden, **dadurch gekennzeichnet, dass** es an jedem Ausgangsport (210b, 212b, 214b) der besagten Switch-Fabric umfasst:

NxM Warteschlangen, wobei N die Anzahl der Eingangsports (210a, 212a, 214a) ist, welche für die Übertragung von Dateneinheiten an den besagten Ausgangsport (210b, 212b, 214b) ausgelegt sind;
eine erste Planungsstufe mit M Warteschlangenplanern (406, 408, 410), wobei jeder Warteschlangenplaner mit einer Klasse (Priorität 1) für die Auswahl einer Prioritätswarteschlange aus den besagten N Warteschlangen (400, 412, 414, 416) innerhalb der besagten Klasse assoziiert ist;
eine zweite Planungsstufe mit einem Klassenplaner (420) für die Auswahl einer nächsten zu bedienenden Prioritätswarteschlange aus den besagten Prioritätswarteschlangen und für die Planung der Übertragung von Dateneinheiten von der nächsten Warteschlange über einen zugeordneten Ausgangs-Link an dem besagten Ausgangsport (210b, 212b, 214b).

**Revendications**

1. Procédé de commutation de trafic de réseau sur un système de commutation pour fournir de multiples niveaux de service avec des garanties de service, **caractérisé en ce qu'**il comprend :

    i) la spécification d'une pluralité de classes de trafic à desservir de manière distincte sur ledit système de commutation ;

    ii) sur un port de sortie (210b, 212b, 214b) dudit système de commutation, le placement d'unités de données arrivant depuis N ports source (210a, 212a, 214a) en M classes de file d'attente, chaque classe ayant une priorité 1..., priorité M, chaque classe comprenant N files d'attente (400, 412, 414, 416) ;

    iii) la sélection (300) d'une file d'attente prioritaire (400, 402, 404) à desservir depuis chacune desdites M classes (400, 412, 414, 416) ;

    iv) la sélection (302) d'une file d'attente suivante (400) à desservir en premier lieu parmi lesdites files d'attente prioritaires (400, 402, 404) sélectionnées à l'étape iii) ; et

    v) la transmission (304) d'unités de données à partir de ladite file d'attente suivante (400) sélectionnée à l'étape iii) via une liaison de sortie associée sur ledit port de sortie (210b, 212b, 214b).

**2.** Procédé de commutation de trafic de réseau selon la revendication 1, dans lequel ladite classe est déterminée par le port source (210a, 212a, 214a) et de destination (210b, 212b, 214b) d'unités de données.

**3.** Procédé de commutation de trafic de réseau selon la revendication 1, dans lequel ladite classe est établie sur la base d'un paramètre de trafic desdites unités de données.

**4.** Procédé de commutation de trafic de réseau selon la revendication 3, dans lequel ledit paramètre de trafic est la largeur de bande.

**5.** Procédé de commutation de trafic de réseau selon la revendication 1, dans lequel ladite classe est identifiée par un indicateur prévu dans l'en-tête desdites unités de données.

**6.** Procédé de commutation de trafic de réseau selon la revendication 1, dans lequel ladite classe est identifiée par une adresse source, une adresse de destination ou des adresses source et de destination des unités de données.

**7.** Procédé de commutation de trafic de réseau selon la revendication 1, dans lequel l'étape iii) comprend la fourniture de M ordonnanceurs de file d'attente (406, 408, 410), chaque ordonnanceur de file d'attente pour chaque classe étant destiné à sélectionner une file d'attente prioritaire respective desdites files d'attente dans une classe.

**8.** Procédé de commutation de trafic de réseau selon la revendication 7, dans lequel lesdits ordonnanceurs de files d'attente (406, 408, 410) utilisent un processus d'ordonnancement par permutation circulaire pondérée.

**9.** Procédé de commutation de trafic de réseau selon la revendication 7, dans lequel lesdits ordonnanceurs de file d'attente (406, 408, 410) utilisent des poids Si associés aux unités de données reçues depuis lesdits ports d'entrée (210a, 212a, 214a).

**10.** Procédé de commutation de trafic de réseau selon la revendication 7, dans lequel l'étape iv) comprend la fourniture d'un ordonnanceur de classe (420) pour sélectionner ladite file d'attente prioritaire suivante parmi lesdites files d'attente prioritaires sélectionnées par lesdits M ordonnanceurs de file d'attente (406, 408, 410).

**11.** Procédé de commutation de trafic de réseau selon la revendication 10, dans lequel ledit ordonnanceur de classe (420) utilise un processus d'ordonnancement par permutation circulaire pondérée.

**12.** Procédé de commutation de trafic de réseau selon la revendication 10, dans lequel ledit ordonnanceur de classe (420) utilise des poids Wi assignés auxdites classes.

**13.** Procédé de commutation de trafic de réseau selon la revendication 12, dans lequel lesdits poids Si et Wi sont configurables.

**14.** Procédé de commutation de trafic de réseau selon la revendication 1, dans lequel chacun desdits ports d'entrée (210a, 212a, 214a) est associé à une source logique desdites unités de données et chacun desdits ports de sortie (210b, 212b, 214b) est associé à une destination logique desdites unités de données.

**15.** Procédé de commutation de trafic de réseau selon la revendication 1, dans lequel les classes sont déterminées selon un niveau de priorité.

**16.** Système d'ordonnancement multi-niveaux pour une matrice de commutation, dans lequel des unités de données sont ordonnancées pour une transmission sur la base d'accords de niveau de service spécifiant M classes de trafic devant être desservies de manière distincte sur ledit système de commutation, **caractérisé en ce qu'**il comprend, sur chaque port de sortie (210b, 212b, 214b) de ladite matrice :

    NxM files d'attente, où N est le nombre de ports d'entrée (210a, 212a, 214a) qui sont adaptés pour transmettre les unités de données audit port de sortie (210b, 212b, 214b) ;

un premier niveau d'ordonnancement, comprenant M ordonnanceurs de file d'attente (406, 408, 410), chaque ordonnanceur de file d'attente étant associé à une classe (priorité 1) pour sélectionner une file d'attente prioritaire parmi lesdites N files d'attente (400, 412, 414, 416) dans ladite classe ;

un deuxième niveau d'ordonnancement, comprenant un ordonnanceur de classe (420) pour sélectionner une file d'attente prioritaire suivante à desservir parmi lesdites files d'attente prioritaires et ordonnancer pour une transmission les unités de données depuis ladite file d'attente suivante via une liaison de sortie associée sur ledit port de sortie (210b, 212b,214b).

**FIG. 1**

201

210a

Input
Port 1

212a

Input
Port 2

214a

Input
Port 3

202

204

210b   212b   214b

Output Output Output
Port 1  Port 2  Port 3

**FIG. 2A**

230

220

Priority 1

222

Priority 2

224

Priority N

202

**FIG. 2B**

300

Specifying the next queue to be
serviced within each class

302

Selecting a next class to be
serviced

304

Sending data from the next queue
of the next class to be serviced via
an associated egress link

**FIG. 3**

FIG. 4

EP 1 489 795 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 465652 P
- WO 9903237 A